# FASCICULE DE BREVET EUROPEEN

(11) **EP 4 108 080 B1**
(45) Date de publication et mention de la délivrance du brevet: **24.04.2024**
(21) Numéro de dépôt: 22176370.9
(22) Date de dépôt: 31.05.2022
(51) Int. Cl.: A01K 47/06

(54) **DISPOSITIF DE PROTECTION DE RUCHE**
SCHUTZVORRICHTUNG FÜR BIENENSTOCK
BEEHIVE PROTECTION DEVICE

(30) Priorité: 31.05.2021 FR 2105680
(43) Date de publication de la demande: 28.12.2022
(73) Titulaire: API & BEE, 47600 Nérac (FR)
(72) Inventeur: RIPET, Frédérique, 47310 Estillac (FR)
(74) Mandataire: Aquinov

(56) Documents cités:
- EP-A1- 3 597 036
- FR-A1- 2 943 217
- US-A1- 2016 212 977

## Description

### Domaine technique.

L'invention concerne un dispositif de protection de ruche et la ruche associée, en vue de protéger les abeilles d'insectes volants prédateurs tels que les frelons européens (Vespa Crabo) et particulièrement les frelons asiatiques (Vespa Velutina).

L'invention se rapporte au domaine technique des dispositifs de protection de ruches.

### Etat de la technique.

Aujourd'hui, les apiculteurs sont confrontés à une destruction massive des abeilles, l'un des principaux fléaux étant le frelon asiatique qui est un redoutable tueur d'abeilles. Le frelon asiatique s'attaque à l'abeille notamment en se plaçant en vol stationnaire à l'entrée de la ruche et capture celle-ci avec ses longues pattes. Le frelon provoque un stress important aux abeilles, les attaque également sur la planche d'envol et va même jusqu'à rentrer au sein de la ruche pour piller le couvain.

Il est connu dans l'art antérieur, par exemple du document EP-A-3597036, un dispositif de protection d'entrée de ruche destiné à être fixé à une ruche, comportant une pluralité de parois définissant un volume ouvert et comportant une pluralité d'orifices de passage. Toutefois ce type de dispositif ralenti seulement les frelons en plein vol. Ceux-ci peuvent toutefois se poser sur l'un des orifices et avancer dans la ruche une fois posé. Les abeilles ne sont donc que partiellement protégées.

L'invention se place donc dans ce contexte et a pour objectif de permettre une protection de l'entrée d'une ruche, empêchant complètement les prédateurs d'entrer dans la ruche et ce, même s'ils parviennent à se poser sur le dispositif de protection.

### Présentation de l'invention.

L'invention a pour objet un dispositif de protection de ruche comportant une première barrière comportant une pluralité de premières parois définissant un premier volume ouvert destiné à être disposé en vis-à-vis de la ruche, au moins l'une des premières parois comportant une pluralité de premiers orifices de passage ; une deuxième barrière comportant une pluralité de deuxièmes parois définissant un deuxième volume ouvert en face arrière et de dimensions inférieures à celles du premier volume, au moins l'une des deuxièmes parois comportant une pluralité de deuxièmes orifices de passage dont les dimensions sont inférieures à celles des premiers orifices de passage, la deuxième barrière étant agencée au sein du volume de la première barrière pour définir un sas entre ces première et deuxième barrières.

Le dispositif de protection de ruche, peut en particulier être utilisé pour lutter contre les prédateurs des abeilles et notamment les frelons qui ont tendance à tuer les abeilles. Les ruches sont habituellement construites en présentant une entrée de ruche par laquelle les abeilles entrent et sortent de la ruche.

La première barrière peut comporter cinq premières parois dites première paroi avant, première paroi inférieure, première paroi supérieure, deux premières parois latérales et premier volume ouvert formant une première face arrière ouverte, opposée à la première paroi avant. La première face arrière ouverte peut être destinée à venir en regard de l'entrée de ruche, dans le plan contenant l'entrée de la ruche, permettant par exemple de protéger ladite entrée des prédateurs.

Chaque première paroi peut comporter une pluralité de premiers orifices de passage dont les dimensions sont conçues pour laisser passer les abeilles en plein vol. Les dimensions des premier orifices de passage sont conçues pour empêcher le franchissement en plein vol d'insectes plus gros que les abeilles, les dimensions peuvent par exemple être conçues pour obliger lesdits insectes à se déplacer à pattes après s'être posés en bord des orifices pour éventuellement s'introduire au travers desdits orifices.

La deuxième barrière comporte cinq deuxième parois de dimensions inférieures aux cinq premières parois de ladite première barrière et un deuxième volume ouvert formant une deuxième face arrière ouverte, destinée à venir en regard d'une entrée de ruche, dans le plan contenant l'entrée de la ruche. Chaque deuxième paroi est destinée à venir en vis-à-vis d'une première paroi. Chaque deuxième paroi peut comporter une pluralité de deuxième orifices de passage.

Le deuxième volume ouvert peut comporter des dimensions inférieures au premier volume ouvert pouvant avantageusement permettre à la deuxième barrière d'être agencée au sein de la première barrière. Les premiers orifices de passage ont des dimensions supérieures aux deuxièmes orifices de passage. La première et la deuxième barrière peuvent ainsi former un sas d'entrée.

Les première et deuxième faces arrière ouvertes peuvent avantageusement présenter une dimension telle qu'elle soit supérieure à la dimension de l'entrée de la ruche sur laquelle le dispositif est destiné à être monté. Les ruches comportent à l'entrée de la ruche, une planche d'envol, montée à l'extérieur de ladite ruche. Par exemple la première face arrière ouverte peut avantageusement présenter une dimension comprise entre 300 mm et 360 mm, notamment entre 320 mm et 340 mm. Par exemple la deuxième face arrière ouverte peut avantageusement présenter une dimension comprise entre 260 mm et 320 mm, notamment entre 280 mm et 300 mm. Les deux premières et les deux deuxièmes parois latérales, la première et la deuxième paroi supérieure et la première et la deuxième paroi inférieure peuvent avantageusement présenter des dimensions telles qu'elles soient supérieures à la largueur de la planche d'envol de la ruche sur laquelle le dispositif est destiné à être installé. Par exemple la première barrière peut présenter une largueur comprise entre 145 mm et 165 mm, notamment entre 150 mm et 160 mm. Par exemple la deuxième barrière peut présenter une largueur comprise entre 125 mm et 145 mm, notamment entre 130 mm et 140 mm. La première paroi inférieure peut être destinée à venir en appui sur ladite planche d'envol.

Ainsi, les abeilles parviennent en plein vol à passer au travers des premiers orifices puis des deuxièmes orifices, et peuvent s'introduire par n'importe laquelle des parois du dispositif, tandis que les autres insectes prédateurs plus gros tels que le frelon, doivent se poser en bordure des orifices pour parvenir à passer les premiers orifices. Si le prédateur pénètre dans le sas entre la première barrière et la deuxième barrière, il se retrouve bloqué par les deuxièmes orifices de la deuxième barrière qu'il ne peut traverser et peut se trouver confronté aux abeilles volant en nombre et en confinement, ce qui peut provoquer un stress chez le prédateur, le poussant à ressortir.

Avantageusement, chaque barrière se présente sous la forme d'un flan comprenant les parois et des zones de liaison pliables entre les parois, les zones de liaison pliables permettant de plier les parois entre elles pour former ladite barrière à partir du flan.

Le dispositif peut avantageusement être fabriqué dans une matière plastique ou dans une matière permettant un pliage manuel tout en conservant la forme donnée. Le dispositif peut être fabriqué par exemple par moulage ou par exemple encore par extrusion pour obtenir un flan à plat puis usiné pour plier les parois sur les zones de liaison pliables permettant de former le dispositif à partir dudit flan.

Avantageusement, au moins l'une des premières parois comporte des organes de fixation et au moins l'une des deuxièmes parois comporte des organes de fixation complémentaires agencés pour coopérer avec les organes de fixation et assembler la première barrière à la deuxième barrière.

Avantageusement la première paroi supérieure, la première paroi inférieure et les deux première parois latérales comportent chacune au moins deux organes de fixation, la première paroi supérieure peut comporter trois organes de fixation. Avantageusement la deuxième paroi supérieure, la deuxième paroi inférieure et les deux deuxième parois latérales comportent chacune au moins deux organes de fixation complémentaire, la deuxième paroi supérieure peut comporter trois organes de fixation complémentaire.

Les organes de fixation et les organes de fixation complémentaires peuvent permettre de solidariser la première barrière et la deuxième barrière pour former le dispositif de protection.

Avantageusement, les organes de fixation complémentaires sont des harpons prévus sur la deuxième barrière et insérés dans des fentes prévues la première barrière et formant les organes de fixation.

Les organes de fixation des premières parois peuvent être des encoches et les organes de fixation complémentaires des deuxièmes parois peuvent être des harpons ou des pattes. Les harpons des deuxièmes parois étant agencés pour être introduits dans les encoches des premières parois, pouvant ainsi permettre d'assembler la première barrière et la deuxième barrière du dispositif.

Avantageusement, la première barrière comporte au moins une première languette s'étendant à partir d'une des premières parois, en ce que la deuxième barrière comporte au moins une deuxième languette s'étendant à partir de l'une des deuxièmes parois.

La première languette de la première barrière peut s'étendre surtout le long de la première paroi. La première barrière peut notamment comporter trois languettes s'étendant chacune à partir de l'une des premières parois, encadrant l'ouverture du volume ouvert défini par la première barrière.

La deuxième languette de la deuxième barrière peut s'étendre sur tout le long de la deuxième paroi destinée à venir en vis-à-vis de la première paroi comportant la première languette. La deuxième barrière peut comporter une trois languettes s'étendant chacune à partir de l'une des deuxièmes parois destinée à venir en vis-à-vis de la première paroi comportant la première languette. Chacune des deuxièmes languettes peut encadrer l'ouverture du volume ouvert défini par la deuxième barrière.

Avantageusement, la première languette forme un organe d'accroche de la première barrière à une ruche.

La première languette s'étendant le long de la première paroi supérieure peut former l'organe d'accroche. La première languette peut être reliée à ladite paroi supérieure de la première barrière par une charnière, notamment formée par une ligne de pliure du flan destiné à former la première barrière. La première languette peut comporter au moins une découpe, par exemple en forme de croix. La première languette peut permettre l'accroche du dispositif de fixation au droit de l'entrée de la ruche, de sorte que l'ouverture dans le volume ouvert défini par la première barrière recouvre l'entrée de cette ruche. L'organe d'accroche de la première languette peut permettre d'accrocher la première barrière à la ruche mais peut également permettre d'accrocher le dispositif de protection grâce à l'assemblage de la première barrière à la deuxième barrière.

Chaque première languette peut former un organe d'accroche et peut comporter au moins une découpe.

Avantageusement, la première languette forme un volet latéral mobile, apte à emprunter une configuration dans laquelle il obture partiellement l'ouverture du premier volume ouvert défini par la première barrière.

La première languette s'étendant le long de chacune des premières parois latérales peut former un volet latéral mobile. Les volets latéraux mobiles peuvent notamment être agencés dans le plan de l'ouverture arrière.

Chaque volet latéral peut notamment être agencé dans le plan de l'ouverture arrière, notamment il peut obturer une partie de l'ouverture du volume ouvert de la première barrière, par exemple pour adapter les dimensions du volume ouvert du dispositif de protection à la longueur d'ouverture de l'entrée de la ruche lorsque celle-ci est plus petite que la longueur totale de l'ouverture du volume arrière de la première barrière. La première barrière peut se retrouver dans trois configurations possibles, une première configuration pouvant comporter une première barrière dont chacun des volets latéraux mobiles peuvent être dans une configuration sans obturation du volume ouvert, une autre configuration pouvant comporter une première barrière dont chacun des volets latéraux mobiles peuvent être dans une configuration obturant chacun partiellement le volume ouvert et une autre configuration encore pouvant comporter une première barrière dont l'un des volets peut être dans une configuration obturant partiellement le volume ouvert et l'autre volet peut être dans une configuration sans obturation du volume ouvert.

Par exemple chaque volet latéral mobile peut présenter une largueur comprise entre 70 mm et 90 mm, notamment entre 75 mm et 85 mm.

Avantageusement, au moins l'un des harpons s'étend à partir de la deuxième languette, en ce qu'au moins l'une des fentes est prévues sur l'arête séparant la première languette de ladite première paroi.

Le harpon formant l'organe de fixation complémentaire peut coopérer avec la fente formant l'organe de fixation et peut permettre à la deuxième languette d'être fixée à la première languette. Chaque deuxième languette comporte une pluralité de harpons et chaque première languette comporte une pluralité de fentes. Le nombre de harpons s'étendant à partir de la deuxième languette peut être identique au nombre de fentes prévues sur l'arête de la première languette correspondante.

L'arête séparant la première languette de la première paroi peut être formée par une zone de liaison pliable munie d'une pluralité de découpes formant les fentes.

Une fois les harpons insérés dans les fentes, la deuxième languette peut permettre un espacement entre la deuxième barrière et la première barrière de manière à pouvoir former le sas.

Avantageusement, les premiers orifices de passage de la première barrière présentent une forme de section ovale et les deuxièmes orifices de passage de la deuxième barrière présentent une forme oblongue.

Les premiers orifices de passage de la première barrière peuvent comporter un grand axe présentant une inclinaison par rapport à la verticale.

Les deuxièmes orifices de passage de la deuxième barrière peuvent avantageusement présenter une forme horizontale, c'est-à-dire pouvant s'étendre dans une direction sensiblement horizontale par rapport à la paroi sur laquelle ils sont installés. Dans un autre mode de réalisation, les orifices de passage de la deuxième barrière peuvent présenter une forme ovale.

Avantageusement, les premiers orifices s'étendent sur chacune des premières parois et les deuxièmes orifices s'étendent sur chacune des deuxièmes parois.

Les premiers orifices et les deuxièmes orifices disposés en vis-à-vis peuvent avantageusement être décalés l'un par rapport à l'autre, ou, lorsqu'ils sont en regard et qu'ils présentent chacun une section ovale, le grand axe de chacun des premieret deuxième orifices ovales en regard l'un de l'autre sont décalés angulairement de manière a pouvoir être agencés à 90°.

Avantageusement, la première barrière comporte une première paroi inférieure horizontale et la deuxième barrière comporte une deuxième paroi inférieure inclinée pour rejoindre la première paroi inférieure au niveau de l'ouverture du premier volume ouvert de la première barrière.

Dans un autre mode de réalisation, la deuxième barrière comporte une deuxième languette s'étendant le long de la deuxième paroi inférieure pouvant permettre un espacement entre la deuxième barrière et la première barrière de manière à pouvoirformer le sas sur la partie inférieure du dispositif de protection.

Avantageusement, la première barrière comporte une première paroi supérieure et la deuxième barrière comporte une deuxième paroi supérieure, et l'inclinaison des première et deuxième parois supérieures sont sensiblement identique.

La première paroi supérieure peut être inclinée de manière convergente depuis l'ouverture du premier volume ouvert jusqu'à la première paroi avant et en direction de la première paroi inférieure. La deuxième paroi supérieure peut être inclinée de manière convergente depuis l'ouverture du deuxième volume ouvert jusqu'à la deuxième paroi avant et en direction de la deuxième paroi inférieure. Les premières parois latérales peuvent être inclinées de manière convergente depuis l'ouverture du volume arrière jusqu'à la première paroi avant et en direction de la première paroi latérale opposée. Les deuxièmes parois latérales peuvent être inclinées de manière convergente depuis l'ouverture du volume arrière jusqu'à la deuxième paroi avant et en direction de la deuxième paroi latérale opposée.

Les inclinaisons des parois supérieures et latérales de la première barrière et de la deuxième barrière peuvent permettre leur empilement lors du transport et du stockage du dispositif de protection.

Un autre aspect de l'invention concerne une ruche comportant un dispositif de protection.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig. 1] représente schématiquement un flan à plat d'une première barrière avant assemblage.
[Fig. 2] représente schématiquement un flan à plat d'une deuxième barrière avant assemblage.
[Fig. 3] représente schématiquement une vue avant d'un dispositif de protection selon un premier mode de réalisation.
[Fig. 4] représente schématiquement une vue arrière d'un dispositif de protection selon un autre mode de réalisation.
[Fig. 5] représente schématiquement une vue de profil, en coupe transversale, du dispositif de protection selon le premier mode de réalisation.

Dans la description qui suit, les éléments identiques, par structure ou par fonction, apparaissant sur différentes figures conservent, sauf précision contraire, les mêmes références.

### Description des modes de réalisation.

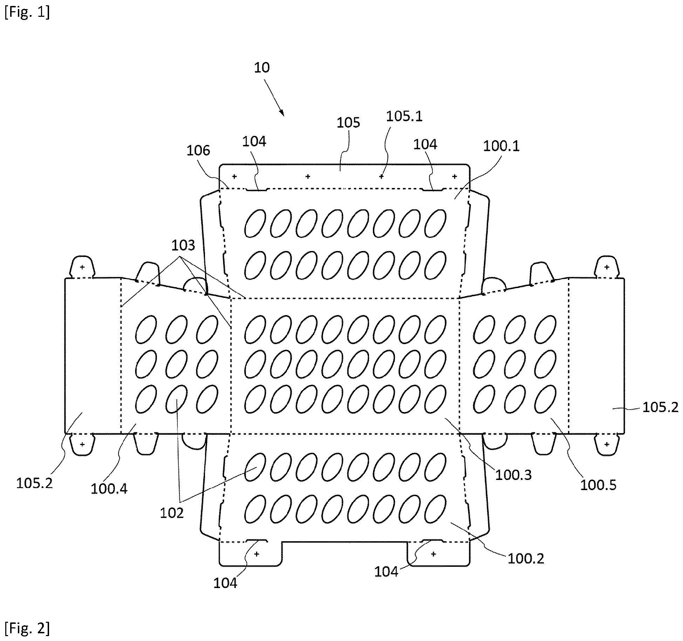

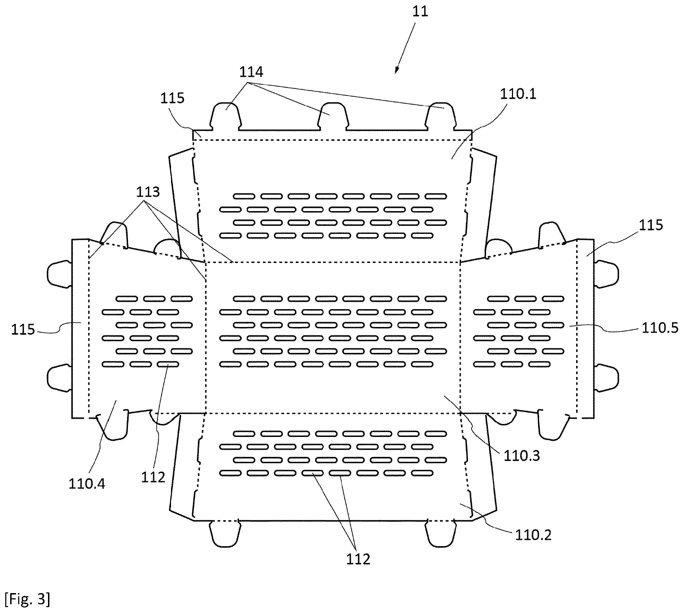

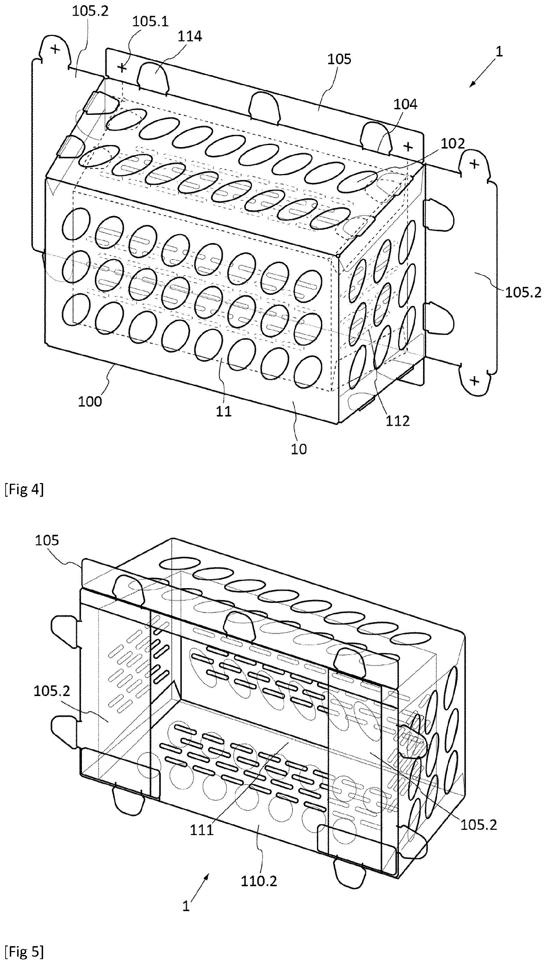

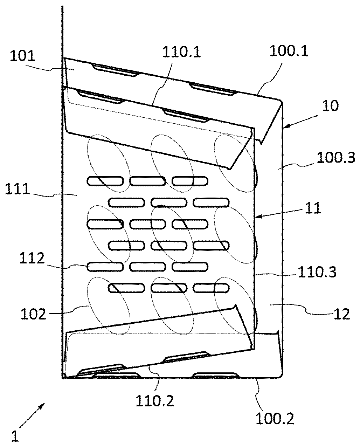

On a représenté en [Fig. 3] un mode de réalisation d'un dispositif de protection 1 d'une ruche, comportant une première barrière 10 représentée en [Fig. 1] et une deuxième barrière 11 représentée en [Fig. 2] définissant un sas 12, décrit en lien avec la [Fig. 5]. Un autre mode de réalisation du dispositif de protection 1 est représenté en [Fig. 4].

La première barrière 10 représentée en [Fig. 1] est fabriquée à partir d'un flan comprenant une pluralité de premières parois 100 séparées par des zones de liaison pliables 103 qui sont pliées pour former la première barrière 10 du dispositif de protection 1.

La première barrière 10 comporte cinq première parois 100 à savoir une première paroi avant 100.3, une première paroi inférieure 100.2, une première paroi supérieure 100.1 et deux premières parois latérales 100.4, 100.5 formant un premier volume ouvert 101, opposé à la première paroi avant 100.3. Chaque première paroi 100.1, 100.2, 100.3, 100.4, 100.5 comporte une pluralité de premiers orifices 102 de passage présentant un forme de section ovale comportant un grand axe, dont les dimensions permettent aux abeilles de passer en plein vol. Chacun des premiers orifices 102 présente une inclinaison de 45° de son grand axe par rapport à la verticale.

La première barrière 10 comporte trois premières languettes 105 s'étendant chacune à partir de l'une des premières parois 100, encadrant l'ouverture du premier volume ouvert 101 défini par la première barrière 10. L'une des première languette 105 est reliée à la première paroi supérieure 100.1 par une charnière formée par une ligne de pliure 103 du flan, pour former un organe d'accroche 105.1. L'organe d'accroche 105.1 comporte au moine une découpe pour accrocher la première barrière à la ruche. Deux autres premières languettes 105 sont chacune reliée aux deux première parois latérales 100.4, 100.5, formant des volets latéraux mobiles 105.2 qui sont ouverts dans ce mode de réalisation.

La deuxième barrière 11 représentée en [Fig. 2] est fabriquée à partir d'un flan comprenant une pluralité de deuxièmes parois 110 séparées par des zones de liaison pliables 113 qui sont pliées pour former la deuxième barrière 11 du dispositif de protection 1.

La deuxième barrière 11 comporte cinq deuxième parois 110 à savoir une deuxième paroi avant 110.3, une deuxième paroi inférieure 110.2, une deuxième paroi supérieure 110.1 et deux deuxième parois latérales 110.4, 110.5 formant un deuxième volume ouvert 111, opposé à la deuxième paroi avant 110.3. Chaque deuxième paroi 110.1, 110.2, 110.3, 110.4, 110.5 présente des dimensions inférieures aux cinq premières parois 100.1, 100.2, 100.3, 100.4, 100.5. Chaque deuxième paroi 110.1, 110.2, 110.3, 110.4, 110.5 comporte une pluralité de deuxième orifices 112 de passage dont les dimensions sont inférieures à celles des premiers orifices de passage 102, dont les dimensions correspondent à la taille d'une abeille. Les deuxièmes orifices de passage 112 présentent une forme oblongue s'étendant dans une direction sensiblement horizontale par rapport à la deuxième paroi qu'ils traversent.

La deuxième barrière 11 comporte trois deuxièmes languettes 115 s'étendant chacune à partir de l'une des deuxièmes parois 110, encadrant l'ouverture du deuxième volume ouvert 111 défini par la deuxième barrière 11. Chacune des deuxièmes languettes 115 est reliée à l'une des deuxièmes parois 110 par une charnière, formée par une ligne de pliure 113 du flan.

Le dispositif de protection 1 représenté en [Fig. 3] et en [Fig. 4] est formé par insertion de la deuxième barrière 11 dans le premier volume ouvert 101 de la première barrière 10.

Chaque deuxième paroi 110.1, 110.2, 110.3, 110.4, 110.5 de la deuxième barrière 11 est destinée à venir en vis-à-vis d'une première paroi 100.1, 100.2, 100.3, 100.4, 100.5 de la première barrière 10.

La première barrière 10 comporte une première paroi supérieure 100.1 et la deuxième barrière 11 comporte une deuxième paroi supérieure 110.1. La première paroi supérieure 100.1 peut être inclinée de manière convergente depuis l'ouverture du premier volume ouvert 101 jusqu'à la première paroi avant 100.3 et en direction de la première paroi inférieure 100.2. La deuxième paroi supérieure 110.1 peut être inclinée de manière convergente depuis l'ouverture du deuxième volume ouvert 111 jusqu'à la deuxième paroi avant 110.3 et en direction de la deuxième paroi inférieure 110.2. Les inclinaisons des première 100.1 et deuxième parois supérieures 110.2 sont donc sensiblement identiques. La première barrière 10 comporte une première paroi inférieure 100.2 horizontale et la deuxième barrière 11 comporte une deuxième paroi inférieure 110.2 inclinée pour rejoindre la première paroi inférieure 100.2 au niveau de l'ouverture du premier volume ouvert 101 de la première barrière 10. Les premières parois latérales 100.4 peuvent être inclinées de manière convergente depuis l'ouverture du premier volume ouvert 101 jusqu'à la première paroi avant 100.3 et en direction de la première paroi latérale opposée 100.5. Les deuxièmes parois latérales 110.4 peuvent être inclinées de manière convergente depuis l'ouverture du deuxième volume ouvert 111 jusqu'à la deuxième paroi avant 110.3 et en direction de la deuxième paroi latérale opposée 110.5.

Chacune des premières languettes 105 est reliée à une première paroi 100 par une arête 106, formée par une zone de liaison pliable 103, l'arête 106 comporte une pluralité de découpes formant des fentes 104. Les fentes 104 sont des organes de fixation. La première paroi supérieure 100.1 comporte trois fentes 104, la première paroi inférieure 100.2 et les deux première parois latérales 100.4, 100.5 comportent chacune deux fentes 104.

Chacune des deuxièmes languettes 115 est reliée à une deuxième paroi 110 par une zone de liaison pliable 114, des harpons 114 formant des organes de fixation complémentaires. La deuxième paroi supérieure 110.1 comporte trois harpons 114, la deuxième paroi inférieure 110.2 et les deux deuxièmes parois latérales 110.4, 110.5 comportent chacune deux harpons 114.

Les harpons 114 de la deuxième paroi 110 sont prévus pour être introduits dans les fentes 104 de la première paroi 100 pour solidariser ensemble la première barrière 10 et la deuxième barrière 11, formant le dispositif de protection 1.

La deuxième barrière 11 ainsi agencée dans le premier volume ouvert 101 de la première barrière 10. Chaque deuxième languette 115 crée un espacement entre la première barrière 10 et la deuxième barrière 11, formant un sas 12.

Dans un autre mode de réalisation représenté en [Fig .4] les volets latéraux mobiles 105.2 de la première barrière 10 empruntent une configuration dans laquelle ils obturent partiellement l'ouverture du premier volume ouvert 101 défini par la première barrière 10 pour adapter les dimensions du volume ouvert du dispositif de protection à la longueur d'ouverture de l'entrée de la ruche. Les volets latéraux mobiles 105.2 sont agencés dans le plan de l'ouverture du premier volume ouvert 101.

La dispositif de protection 1 est disposé à l'entrée de la ruche et repose sur un plancher d'envol de la ruche de sorte que le premier volume ouvert 101 et le deuxième volume ouvert 111 viennent en regard de l'entrée de la ruche. Le dispositif de protection 1 est fixé à la ruche par la première languette 105 formant l'organe d'accroche 105.1.

Les abeilles parviennent en plein vol à passer au travers des premiers orifices de passage 102 puis des deuxièmes orifices de passage 112, et peuvent s'introduire par n'importe laquelle des parois premières parois 100.1, 100.2, 100.3, 100.4, 100.5 du dispositif. Les dimensions des premiers orifices de passage 102 sont conçues pour empêcher le franchissement en plein vol d'insectes plus gros que les abeilles, comme les frelons, en les obligeant à se déplacer à pattes après s'être posés sur la première barrière 10 pour éventuellement s'introduire au travers desdits premiers orifices 102.

Si le prédateur pénètre dans le sas 12 entre la première barrière 10 et la deuxième barrière 11, il se retrouve bloqué par les dimensions des deuxièmes orifices 112 de la deuxième barrière 11 qu'il ne peut traverser et se trouve confronté aux abeilles volant en nombre, ce qui peut provoquer un stress chez le prédateur, le poussant à ressortir.

La description qui précède explique clairement comment l'invention permet d'atteindre les objectifs qu'elle s'est fixée, à savoir proposer une protection de l'entrée d'une ruche, empêchant complètement les prédateurs d'entrer dans la ruche et ce, même s'ils parviennent à se poser sur le dispositif de protection, en proposant un dispositif de protection de ruche comportant une première barrière et une deuxième barrière agencée dans la première barrière pour définir un sas.

## Revendications

1. Dispositif de protection (1) de ruche comportant :
- Une première barrière (10) comportant une pluralité de premières parois (100) définissant un premier volume ouvert (101) destiné à être disposé en vis-à-vis de la ruche, au moins l'une des premières parois (100) comportant une pluralité de premiers orifices (102) de passage ; **caractérisé par**
- Une deuxième barrière (11) comportant une pluralité de deuxièmes parois (110) définissant un deuxième volume ouvert (111) en face arrière et de dimensions inférieures à celles du premier volume (101), au moins l'une des deuxièmes parois (110) comportant une pluralité de deuxièmes orifices (112) de passage dont les dimensions sont inférieures à celles des premiers orifices (102) de passage, la deuxième barrière (11) étant agencée au sein du volume de la première barrière (10) pour définir un sas (12) entre ces première (10) et deuxième barrières (11).

2. Dispositif de protection (1) de ruche selon la revendication précédente, **caractérisé en ce que** chaque barrière (10, 11) se présente sous la forme d'un flan comprenant les parois (100, 110) et des zones de liaison pliables (103, 113) entre les parois (100, 110), les zones de liaison pliables (103, 113) permettant de plier les parois (100, 110) entre elles pour former ladite barrière (10, 11) à partir du flan.

3. Dispositif de protection (1) de ruche selon l'une des revendications 1 ou 2, **caractérisé en ce qu'**au moins l'une des premières parois (100) comporte des organes de fixation (104) et **en ce qu'**au moins l'une des deuxièmes parois (110) comporte des organes de fixation complémentaires (114) agencés pour coopérer avec les organes de fixation (104) et assembler la première barrière (10) à la deuxième barrière (11).

4. Dispositif de protection (1) de ruche selon la revendication 3, **caractérisé en ce que** les organes de fixation complémentaires sont des harpons (114) prévus sur la deuxième barrière (11) et insérés dans des fentes (104) prévues la première barrière (10) et formant les organes de fixation.

5. Dispositif de protection (1) de ruche selon l'une des revendication 1 à 4, **caractérisé en ce que** la première barrière (10) comporte au moins une première languette (105) s'étendant à partir d'une des premières parois (100), **en ce que** la deuxième barrière (11) comporte au moins une deuxième languette (115) s'étendant à partir de l'une des deuxièmes parois (110).

6. Dispositif de protection (1) de ruche selon la revendication 5, **caractérisé en ce que** la première languette (105) forme un organe d'accroche (105.1) de la première barrière (10) à une ruche.

7. Dispositif de protection (1) de ruche selon la revendication 5, **caractérisé en ce que** la première languette (105) forme un volet latéral mobile (105.2), apte à emprunter une configuration dans laquelle il obture partiellement l'ouverture du premier volume ouvert (101) défini par la première barrière (10).

8. Dispositif de protection (1) de ruche selon l'une des revendications 5 à 7 prise en combinaison avec le revendication 4, **caractérisé en ce que** au moins l'un des harpons (114) s'étend à partir de la deuxième languette (115), **en ce qu'**au moins l'une des fentes (104) est prévues sur l'arête (106) séparant la première languette (105.1) de ladite première paroi (100).

9. Dispositif de protection (1) de ruche selon l'une des revendications précédentes, **caractérisé en ce que** les premiers orifices (102) de passage de la première barrière (10) présentent une forme de section ovale et les deuxièmes orifices (112) de passage de la deuxième barrière (11) présentent une forme oblongue.

10. Dispositif de protection (1) de ruche selon l'une des revendication précédentes, **caractérisé en ce que** les premiers orifices (102) s'étendent sur chacune des premières parois (100) et les deuxièmes orifices (112) s'étendent sur chacune des deuxièmes parois (110).

11. Dispositif de protection (1) de ruche selon l'une des revendication précédentes, **caractérisé en ce que** la première barrière (10) comporte une première paroi inférieure (100.2) horizontale et la deuxième barrière (11) comporte une deuxième paroi inférieure (110.2) inclinée pour rejoindre la première paroi inférieure (100.2) au niveau de l'ouverture du premier volume ouvert (101) de la première barrière (10).

12. Dispositif de protection (1) de ruche selon l'une des revendication précédentes, **caractérisé en ce que** la première barrière (10) comporte une première paroi supérieure (100.1) et **en ce que** la deuxième barrière (11) comporte une deuxième paroi supérieure (110.1), et **en ce que** l'inclinaison des première (100.1) et deuxième parois supérieures (110.1) sont sensiblement identique.

13. Ruche comportant un dispositif de protection (1) selon l'une quelconque des revendications précédentes.

## Patentansprüche

1. Bienenstockschutzvorrichtung (1), umfassend:
- eine erste Barriere (10), umfassend eine Vielzahl von ersten Wänden (100), die ein erstes offenes Volumen (101) definieren, das dafür bestimmt ist, gegenüber dem Bienenstock angeordnet zu werden, wobei mindestens eine der ersten Wände (100) eine Vielzahl von ersten Durchgangsöffnungen (102) umfasst; **gekennzeichnet durch**
- eine zweite Barriere (11), umfassend eine Vielzahl von zweiten Wänden (110), die ein zweites offenes Volumen (111) an der Rückseite definieren und mit kleineren Abmessungen als diejenigen des ersten Volumens (101), wobei mindestens eine der zweiten Wände (110) eine Vielzahl von zweiten Durchgangsöffnungen (112) umfasst, deren Abmessungen kleiner als diejenigen der ersten Durchgangsöffnungen (102) sind, wobei die zweite Barriere (11) innerhalb des Volumens der ersten Barriere (10) zum Definieren einer Schleuse (12) zwischen dieser ersten (10) und zweiten (11) Barriere angeordnet ist.

2. Bienenstockschutzvorrichtung (1) nach dem vorstehenden Anspruch, **dadurch gekennzeichnet, dass** jede Barriere (10, 11) in Form eines Zuschnitts vorliegt, der die Wände (100, 110) und faltbare Verbindungsbereiche (103, 113) zwischen den Wänden (100, 110) aufweist, wobei die faltbaren Verbindungsbereiche (103, 113) es ermöglichen es, die Wände (100, 110) untereinander zu falten, um die Barriere (10, 11) aus dem Zuschnitt auszubilden.

3. Bienenstockschutzvorrichtung (1) nach einem der Ansprüche 1 oder 2, **dadurch gekennzeichnet, dass** mindestens eine der ersten Wände (100) Befestigungsmittel (104) umfasst und dass mindestens eine der zweiten Wände (110) komplementäre Befestigungsmittel (114) aufweist, die angeordnet sind, um mit den Befestigungsmitteln (104) zusammenzuwirken und die erste Barriere (10) mit der zweiten Barriere (11) zusammenzufügen.

4. Bienenstockschutzvorrichtung (1) nach Anspruch 3,
**dadurch gekennzeichnet, dass** die komplementären Befestigungsmittel Haken (114) sind, die an der zweiten Barriere (11) vorgesehen sind und in Schlitze (104) eingeführt werden, die der ersten Barriere (10) vorgesehen sind und die Befestigungsmittel ausbilden.

5. Bienenstockschutzvorrichtung (1) nach einem der Ansprüche 1 bis 4, **dadurch gekennzeichnet, dass** die erste Barriere (10) mindestens eine erste Lasche (105) umfasst, die sich von einer der ersten Wände (100) erstreckt, dass die zweite Barriere (11) mindestens eine zweite Lasche (115) umfasst, die sich von einer der zweiten Wände (110) erstreckt.

6. Bienenstockschutzvorrichtung (1) nach Anspruch 5,
**dadurch gekennzeichnet, dass** die erste Lasche (105) ein Mittel (105.1) zum Einhaken der ersten Barriere (10) an einem Bienenstock ausbildet.

7. Bienenstockschutzvorrichtung (1) nach Anspruch 5,
**dadurch gekennzeichnet, dass** die erste Lasche (105) eine bewegbare Seitenklappe (105.2) ausbildet, die geeignet ist, eine Konfiguration zu benutzen, in der sie die Öffnung des ersten offenen Volumens (101), das durch die erste Barriere (10) definiert ist, teilweise verschließt.

8. Bienenstockschutzvorrichtung (1) nach einem der Ansprüche 5 bis 7 in Kombination mit Anspruch 4, **dadurch gekennzeichnet, dass** mindestens einer der Haken (114) sich von der zweiten Lasche (115) erstreckt, dass mindestens einer der Schlitze (104) an der Kante (106), die die erste Lasche (105.1) von der ersten Wand (100) trennt, vorgesehen ist.

9. Bienenstockschutzvorrichtung (1) nach einem der vorstehenden Ansprüche, **dadurch gekennzeichnet, dass** die ersten Durchgangsöffnungen (102) der ersten Barriere (10) eine Form mit ovalem Abschnitt vorweisen und die zweiten Durchgangsöffnungen (112) der zweiten Barriere (11) eine längliche Form vorweisen.

10. Bienenstockschutzvorrichtung (1) nach einem der vorstehenden Ansprüche, **dadurch gekennzeichnet, dass** die ersten Öffnungen (102) sich an jeder der ersten Wände (100) erstrecken und die zweiten Öffnungen (112) sich an jeder der zweiten Wände (110) erstrecken.

11. Bienenstockschutzvorrichtung (1) nach einem der vorstehenden Ansprüche, **dadurch gekennzeichnet, dass** die erste Barriere (10) eine horizontale erste untere Wand (100.2) umfasst und die zweite Barriere (11) eine zweite untere Wand (110.2) umfasst, die geneigt ist, um auf die erste untere Wand (100.2) an der Öffnung des ersten offenen Volumens (101) der ersten Barriere (10) zu treffen.

12. Bienenstockschutzvorrichtung (1) nach einem der vorstehenden Ansprüche, **dadurch gekennzeichnet, dass** die erste Barriere (10) eine erste obere Wand (100.1) umfasst und dass die zweite Barriere (11) eine zweite obere Wand (110.1) umfasst, und dass die Neigung der ersten (100.1) und der zweiten oberen Wand (110.1) im Wesentlichen gleich ist.

13. Bienenstock, umfassend eine Schutzvorrichtung (1) nach einem der vorstehenden Ansprüche.

## Claims

1. A beehive protection device (1) comprising:
- A first barrier (10) comprising a plurality of first walls (100) defining a first open volume (101) intended to be arranged facing the beehive, at least one of the first walls (100) comprising a plurality of first passage orifices (102); **characterized by**
- A second barrier (11) comprising a plurality of second walls (110) defining a second open volume (111) on the rear face and of dimensions smaller than those of the first volume (101), at least one of the second walls (110) comprising a plurality of second passage orifices (112) whose dimensions are smaller than those of the first passage orifices (102), the second barrier (11) being arranged within the volume of the first barrier (10) to define an airlock (12) between these first (10) and second (11) barriers.

2. The beehive protection device (1) according to the preceding claim, **characterized in that** each barrier (10, 11) is in the form of a blank comprising the walls (100, 110) and foldable connection areas (103, 113) between the walls (100, 110), the foldable connection areas (103, 113) allowing the walls (100, 110) to be folded together to form said barrier (10, 11) from the blank.

3. The beehive protection device (1) according to one of claims 1 or 2, **characterized in that** at least one of the first walls (100) comprises fastening members (104) and **in that** at least one of the second walls (110) comprises complementary fastening members (114) arranged to cooperate with the fastening members (104) and to assemble the first barrier (10) to the second barrier (11).

4. The beehive protection device (1) according to claim 3,
**characterized in that** the complementary fastening members are harpoons (114) provided on the second barrier (11) and inserted into slots (104) provided the first barrier (10) and forming the fastening members.

5. The beehive protection device (1) according to one of claims 1 to 4, **characterized in that** the first barrier (10) comprises at least one first tab (105) extending from one of the first walls (100), **in that** the second barrier (11) comprises at least one second tab (115) extending from one of the second walls (110).

6. The beehive protection device (1) according to claim 5,
**characterized in that** the first tab (105) forms an attachment member (105.1) for attaching the first barrier (10) to a beehive.

7. The beehive protection device (1) according to claim 5,
**characterized in that** the first tab (105) forms a movable side flap (105.2), able to assume a configuration wherein it partially blocks the opening of the first open volume (101) defined by the first barrier (10).

8. The beehive protection device (1) according to one of claims 5 to 7, taken in combination with claim 4, **characterized in that** at least one of the harpoons (114) extends from the second tab (115), **in that** at least one of the slots (104) is provided on the edge (106) separating the first tab (105.1) from said first wall (100).

9. The beehive protection device (1) according to one of the preceding claims, **characterized in that** the first passage orifices (102) of the first barrier (10) have an oval cross-sectional shape and the second passage orifices (112) of the second barrier (11) have an oblong shape.

10. The beehive protection device (1) according to one of the preceding claims, **characterized in that** the first orifices (102) extend over each of the first walls (100) and the second orifices (112) extend over each of the second walls (110).

11. The beehive protection device (1) according to one of the preceding claims, **characterized in that** the first barrier (10) comprises a first horizontal bottom wall (100.2) and the second barrier (11) comprises a second bottom wall (110.2) that is inclined to join the first bottom wall (100.2) at the opening of the first open volume (101) of the first barrier (10).

12. The beehive protection device (1) according to one of the preceding claims, **characterized in that** the first barrier (10) comprises a first upper wall (100.1) and **in that** the second barrier (11) comprises a second upper wall (110.1), and **in that** the inclination of the first (100.1) and second (110.1) upper walls are substantially identical.

13. A beehive comprising a protection device (1) according to any one of the preceding claims.
